# EUROPEAN PATENT SPECIFICATION

(11) **EP 3 330 586 B1**
(45) Date of publication and mention of the grant of the patent: **29.04.2020**
(21) Application number: 16201781.8
(22) Date of filing: 01.12.2016
(51) Int. Cl.: F16K 31/524, F16K 3/24, B60C 25/138, F16K 11/07

(54) **PNEUMATIC VALVE UNIT**
PNEUMATISCHE VENTILEINHEIT
UNITÉ DE VALVE PNEUMATIQUE

(43) Date of publication of application: 06.06.2018
(73) Proprietor: Snap-on Equipment Srl a unico socio, 42015 Correggio (RE) (IT)
(72) Inventor: BALSOTTI, Luigi, 06123 Perugia (PG) (IT); BALUGANI, Davide, 41013 Castelfranco Emilia (MO) (IT); ROSI, Roberto, 41028 Serramazzoni (MO) (IT); SOTGIU, Paolo, 41125 Modena (IT)
(74) Representative: Eisenführ Speiser

(56) References cited:
- CN-U- 201 442 498
- CN-U- 205 036 896
- FR-A1- 2 957 648
- GB-A- 2 494 902
- JP-A- 2008 291 984
- US-B1- 7 543 622

## Description

The present invention relates to a pneumatic valve unit for use in a tire changer for selectively connecting at least one pressure source of the tire changer to at least one operating member of the tire changer upon successive operation of at least one pedal of the tire changer.

In particular, the present invention relates to a pneumatic valve unit according to claim 1.

A tire changer comprises a number of pneumatically driven components, such as a bead breaker arm, a bead breaker blade, a turntable and clamping jaws of the turntable. Further, a tire changer comprises an inflator for inflating a tire to be mounted on the turntable. A pressure tank is generally provided as a source of pressurised air for the various operating members. To connect the pressure source to an operating member or to connect the pressure source to another operating member, a linear pneumatic valve is used.

CN 201442498 U discloses a pneumatic valve unit for use in a tire changer. The pneumatic valve unit is used for selectively connecting a pressure source to a turntable of the tire changer. The pneumatic valve unit comprises a linear pneumatic valve which has a valve housing and an axially moveable plunger received therein. A spring loaded foot pedal of the tire changer is pivotably supported by a shaft. The shaft also pivotably supports an attachment plate to which a first end of a lever is coupled. The second end of the lever is coupled to a cam mechanism positioned laterally of the pneumatic valve. By depressing the pedal, the attachment plate is pivoted forwardly. This movement is transmitted to the lever, causing the second end of the lever to be guided by the cam mechanism until the cam mechanism prevents further movement of the second end of the lever and thus of the pedal. Then, the pedal has reached a predetermined position. The shaft is also coupled to a control rod which, in turn, is coupled to the plunger. Depressing the pedal causes the plunger to move axially within the pneumatic valve. In this way, each predetermined position of the foot pedal corresponds to a predetermined axial position of the plunger within the pneumatic valve.

It is further known to use, in a pneumatic valve unit for use in a tire changer, a pneumatic spool valve. A spool of the known pneumatic spool valve is coupled to a spring loaded foot pedal of the tire changer. The spool valve extends generally horizontally and is used to selectively connect a pressure source to different operating members of the tire changer. The foot pedal is also coupled to one end of a lever, wherein the other end of the lever has a pin orthogonally projecting therefrom. The pin is movably received in a guiding block. The guiding block is positioned laterally of the spool valve and adapted to guide the pin along a closed guide path. The guide path extends in a vertical plane parallel to the direction of extension of the spool valve and is formed with a first, a second and a third trough. The first and second troughs are horizontally separated by a vertically extending first peak and the second and third troughs are horizontally separated by a vertically extending second peak. The guide path further has a straight section connecting the first and third troughs with each other. Upon successive operation of the foot pedal, the pin is moved along the guide path from the first troughs to the second and third trough, and finally, upon the action of the spring, back to the first trough along the straight section. Thus, the pin is successively movable into one of three predetermined positions, each position corresponding to an associated trough and to a different level of depression of the pedal. Each predetermined position of the foot pedal, in turn, corresponds to a predetermined axial position of the spool within the spool valve. In this way, upon successive operation of the foot pedal, the spool is movable through three predetermined axial positions, wherein each axial position of the spool connects the pressure tank to a different operating member.

DE 10 2010 016 037 A1 discloses a switchover valve for an internal combustion engine, wherein the switchover valve has a ballpoint mechanism, which is engaged by applying an actuating impulse to an actuating unit of the ballpoint mechanism and is coupled with the switchover valve in such way that the two engagement positions correspond to a respective switching position of a control piston of the switchover valve. The control piston of the switchover valve is displaceable in opposite direction of the actuating impulse around a predetermined path.

CN 205036896 U discloses a diverter valve with a ballpoint mechanism.

US 7,543,622 B1 discloses a pneumatic valve unit for use in a tire changer for selectively connecting at least one pressure source of the tire changer to at least two operating members of the tire changer upon operation of at least one pedal of the tire changer, the pneumatic valve unit comprising a pneumatic valve comprising a valve housing defining a valve chamber, the valve housing having at least one inlet for fluidly connecting the valve chamber to the pressure source, and at least one outlet for fluidly connecting the valve chamber to the operating members; a plunger axially slidably received in the valve housing, the plunger being operatively coupleable to the pedal and movable between at least two predetermined axial positions upon operation of the pedal so as to selectively connect the operating members to the pressure source, and wherein the plunger, upon operation of the pedal, is movable between at least three predetermined axial positions such that the pneumatic valve has at least two working positions, wherein in each working position one of the operating members is fluidly connected to the pressure source, and at least one resting position, in which the operation members are fluidly disconnected from the pressure source.

It is an object of the present invention to provide a pneumatic valve unit of the above-mentioned type for use in a tire changer that is more compact than known pneumatic valve units for use in a tire changer. In particular, it is an object of the present invention to provide a pneumatic valve unit of the above-mentioned type that has a reduced height and/or width compared to known pneumatic valve units for use in a tire changer.

The object is solved by a pneumatic valve unit as defined in claim 1.

In a pneumatic valve unit of the present invention, the selection mechanism, upon actuation of the plunger, is arranged to first provide an axial forced guidance of the spacer body of the selection mechanism, and to subsequently provide an axial and rotational cam controlled guidance of the spacer body. The plunger is actuated by operation of the pedal. Thus, under forced guidance, the spacer body moves only axially, while under cam controlled guidance, the spacer body moves both axially and rotationally.

According to the present invention, the selection mechanism coacts directly with the plunger. In known pneumatic valve units, the cam mechanism coacts with a lever provided in addition to the plunger. Since in a pneumatic valve unit of the present invention there is no need to provide an additional component laterally offset from the plunger, it requires less space (construction width) and is therefore more compact than known pneumatic valve units. Moreover, the cam mechanism of known pneumatic valve units guides the lever along a curved path such that the lever performs a movement having a component parallel to the direction of movement of the plunger and a component orthogonal thereto. In other words, the lever of the known pneumatic valve unit has two translational degrees of freedom. In contrast, the selection mechanism of the pneumatic valve unit of the present invention has only one translational degree of freedom and one rotational degree of freedom. This reduces the space (construction height) required by the pneumatic valve unit of the present invention in comparison to the space required by known pneumatic valve units.

According to a preferred embodiment, the cam body is fixedly connected to the plunger. The cam body and the plunger may also be formed integrally with one another. In this way, the cam body and the plunger may move in unison. This has the effect that restraining the rotational movement of the cam body also restrains the rotational movement of the plunger. This is particularly preferred when the pneumatic valve is a linear pneumatic valve, such as a linear spool valve.

It is further preferred that the spacer body has a central bore for receiving the plunger therein. This allows the spacer body to be axially slidably and rotatably received on the plunger. In this way, the spacer body may be the only component of the selection mechanism performing a rotational movement upon actuation of the plunger.

According to another preferred embodiment, the selector mechanism further comprises at least one axially extending stop member for coacting with the cam surfaces of the cam body and the spacer surfaces of the spacer body. Preferably, the stop member protrudes radially inwardly from the selector housing into a selector chamber defined by the selector housing. Preferably, the selector housing is provided with a pair of parallel, longitudinally inwardly protruding stop members at a rear end portion of the selector housing. The at least one stop member may be formed separately from or integrally with the selector housing. If the selector housing is held stationary, i.e., axially and rotationally restrained, the stop member is also stationary. This may be achieved, for instance, by fixedly attaching the selector housing to a stationary pedal bracket. In this case, no rotational movement is transmitted from the stop member to the cam body.

To reduce the axial length of the pneumatic valve unit, one end of the selector housing may be fixedly connected to one end of the valve housing. Preferably, a rear end portion of the valve housing is fixedly secured to a front end portion of the selector housing.

The axial length of the pneumatic valve unit may be further reduced by axially and rotatively spacing the at least one inlet and the at least one outlet from one another. For example, the at least one outlet may be inclined between 40° and 60°, while the at least one inlet may be inclined between 120° and 140° relative to a horizontal plane through the longitudinal axis of the plunger.

Further, it is preferred that the selector housing encloses a selector chamber such that the selector mechanism may not become blocked by loose parts or dirt.

The selector mechanism may further comprise a limiting member arranged on the plunger for limiting axial movement of the spacer body. The limiting member may be formed separately from or integrally with the plunger. The limiting member may also limit the extent of operation of the pedal. For instance, the limiting member may indicate a maximum extent of depression of the pedal. Further, the limiting member may provide a shoulder for a resilient spring that may be used to bias the spacer body towards the cam body.

Preferably, the bore of the spacer body is a stepped bore. The stepped bore may have an enlarged diameter portion for receiving a first end of the resilient spring seated against the limiting member and a reduced diameter portion for providing a shoulder for a second end of the spring member to bear against. By placing the resilient spring within the bore of the spacer body and about the plunger, the axial dimension of the pneumatic valve unit may be reduced compared to the case when the second end of the resilient spring abuts an axial end of the spacer body.

It will be appreciated that any suitable elastic or resilient member may be used as a biasing member for the spacer body. Alternatively or additionally, a biasing force may also be provided pneumatically to the spacer body.

The number of predetermined axial positions may be an odd number. According to the present invention, the plunger, upon successive operation of the pedal, is successively movable between three predetermined axial positions. The pneumatic valve may be a two-way valve having one inlet and two outlets. According to the present invention, the pneumatic valve has two working positions, in which at least one operating member is fluidly connected to the pressure source, and one resting position, in which the operation members are fluidly disconnected from the pressure source. However, the number of predetermined axial positions is not restricted to three and more are also possible.

According to a preferred embodiment, the pedal is operated by depressing the pedal and each predetermined axial position of the plunger corresponds to a predetermined depression position of the plunger. It is preferred when the pedal is operated by foot such that the hands of an operator are free, for example, for operating a bead breaker of a tire changer.

According to a preferred embodiment, the plunger is in an initial axial position when the pedal is in an initial non-depressed position, the plunger is in a first axial position when the pedal is in a first depressed position, and the plunger is in a second axial position when the pedal is in a second depressed position, wherein the pedal is more depressed in the second depressed position than in the first depressed position. This allows an operator to intuitively operate the pneumatic valve unit.

According to a preferred embodiment, the plunger is movable from the initial axial position to the second axial position by depressing the pedal from the initial non-depressed position directly to the second depressed position. In this way, the first axial position of the plunger may be omitted, when the associated connection to an operating member is not or not yet required.

The present invention further relates to a tire changer comprising at least one pressure source, at least one operating member, at least one pedal and at least one a pneumatic valve unit, wherein the pneumatic valve unit is configured as described above.

Other objects and advantages of the present invention will appear from the following description taken in connection with the appended drawings, wherein:
- Fig. 1: is a general overview of a tire changer;
- Fig. 2: shows a perspective view of a pneumatic valve unit according to an embodiment of the present invention;
- Fig. 3: shows a sectional view of a pneumatic valve of the pneumatic valve unit of Fig. 2 having a sealing assembly;
- Fig. 4: shows the sealing assembly of Fig. 3 in a perspective view;
- Fig. 5: shows a sectional view of a selection mechanism of the pneumatic valve unit of Fig. 2 having a spacer body and a cam body;
- Fig. 6: shows the spacer body and the cam body of Fig. 5 in a perspective view;
- Figs. 7A-S: show a schematic illustration of the working principle of the selection mechanism of the pneumatic valve unit of Fig. 2 in successive operational steps; and
- Fig. 8A-F: show perspective views of the pneumatic valve unit of Fig. 2 in successive operational steps.

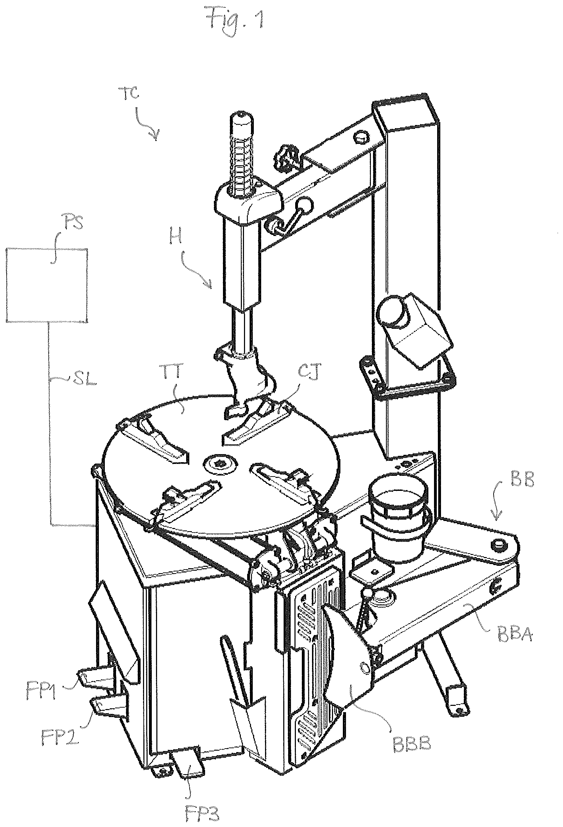

In Fig. 1, a tire changer **TC** is illustrated. Tire changer comprises a mount/demount head **H.** Tire changer **TC** also comprises a number of operating members. For instance, tire changer **TC** comprises a pneumatically operated turntable **TT** having pneumatically operated clamping jaws **CJ** for mounting a tire (not shown) thereon. Tire changer **TC** further comprises a pneumatically operated bead breaker **BB** having a bead breaker arm **BBA** and a bead breaker blade **BBB** for breaking the bead of a tire. Tire changer **TC** is operatively connected to a pressure source **PS** via a supply line **SL.** Supply line **SL** may be opened and closed by means of foot pedals **FP1, FP2** and **FP3** of tire changer **TC.** Thus, operation of turntable **TT,** clamping jaws **CJ,** bead breaker arm **BBA** and bead breaker blade **BBB** is controlled by operation of foot pedals **FP1, FP2** and **FP3.**

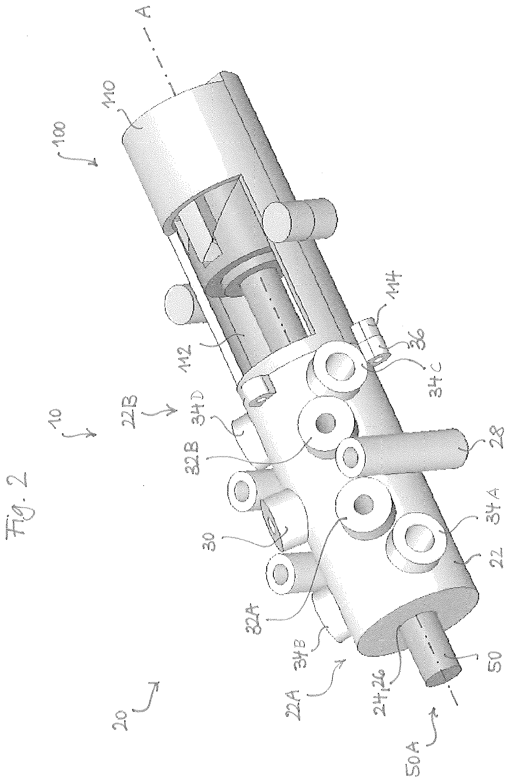

Referring now to Fig. 2, the preferred embodiment of a pneumatic valve unit **10** comprises a pneumatic valve **20** and a selection mechanism **100.** Pneumatic valve **20** and selection mechanism **100** are actuated by a cylindrical plunger **50** extending along a longitudinal axis **A.** Plunger **50** extends through pneumatic valve **20** and into selection mechanism **100.**

Pneumatic valve **20** comprises a substantially cylindrical valve housing **22** defining a cylindrical valve chamber **26.** Valve chamber **26** receives plunger **50** through an opening **24** formed at a front end portion **22A** of valve housing **22.** At a front end portion **50A** of plunger **50,** plunger **50** is coupled to a spring loaded foot pedal **FP** (not shown). Foot pedal **FP** may be any one of foot pedals **FP1, FP2** or **FP3.** Plunger **50** is normally biased rearwardly by the spring (not shown) of foot pedal **FP**. Pneumatic valve **20** comprises attachment means **28** for attaching valve housing **22** to tire changer **TC.**

Although the terms "front", "forwardly" "rear" and "rearwardly" and the like are used to refer to relative positions or directions of movement of the various components of pneumatic valve unit **10,** these terms shall not be understood to limit the arrangement of any such component within tire changer **TC.**

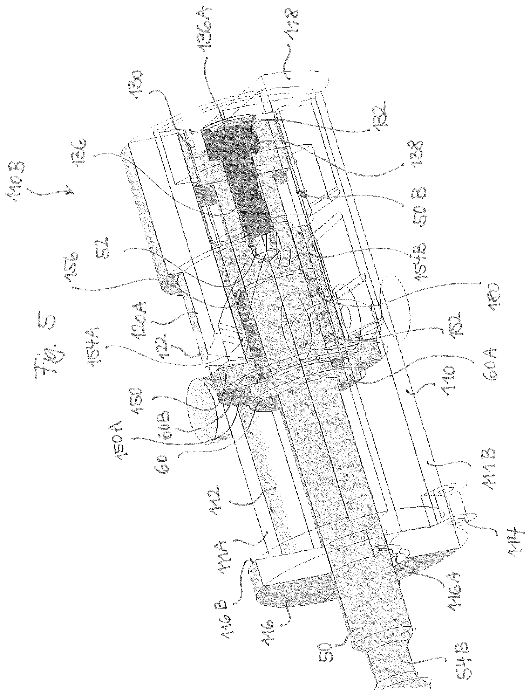

As can be seen in Figs. 2 and 5, selection mechanism **100** comprises a cylindrical selector housing **110** defining a cylindrical selector chamber **112.** Selector housing **110** comprises a front end plate **116** having an opening **116A** and a rear end plate **118.** Plunger **50** projects through opening **116A** and extends through selector chamber **112.** Selector housing **110** may be formed of an upper shell **111A** and a lower shell **111B** which may be connected in any suitable manner. Alternatively, upper shell **111A** and lower shell **111B** may be formed integrally with each other.

In Figs. 2, 5 and 8, selector housing **110** is shown with a window to expose the internal components of the selection mechanism **100** which will be discussed in more detail below.

With continued reference to Fig. 2, selector housing **110** comprises fixation members **114** which may, for example, receive a bolt (not shown) to rigidly secure selector housing **110** to fixation members **36** of valve housing **22.**

Valve housing **22** comprises an inlet **30** and two outlets **32A, 32B.** Inlet **30** is operatively connected to pressure source **PS**. Each of outlets **32A, 32B** may be connected to actuation means (e.g., pneumatic cylinders) associated with an operating member of tire changer **TC,** such as turntable **TT,** clamping jaws **CJ** or bead breaker **BB.** Valve housing **22** further comprises four vent silencers **34A, 34B, 34C, 34D.** Vent silencers **34A, 34B** are arranged near front end portion **22A** of valve housing **22,** while vent silencers **34C, 34D** are arranged near a rear end portion **22B** of valve housing **22.**

In the mounted state of pneumatic valve unit **10** shown in embodiment of Fig. 2, outlets **32A, 32B** are arranged at an angle of 50° relative to a horizontal plane, while inlet **30** is arranged at an angle of 130° relative to a horizontal plane. Vent silencers **34A, 34C** are arranged at an angle of 25° relative to a horizontal plane, while vent silencers **34B, 34D** are arranged at an angle of 155° relative to a horizontal plane. It will be appreciated that inlet **30,** outlets **32A, 32B** and vent silencers **34A, 34B, 34C, 34D** may be arranged at other angles relative to a horizontal plane. Further, the pair of outlets **32A, 32B,** vent silencers **34A, 34C** and/or vent silencers **34B, 34D** need not be arranged at the same angle relative to a horizontal plane. However, inlet **30,** outlets **32A, 32B** and vent silencers **34A, 34B, 34C, 34D** are preferably so arranged that inlet **30** and outlets **32A, 32B** can be connected by a hose of sorts to pressure source **PS** or an operating member.

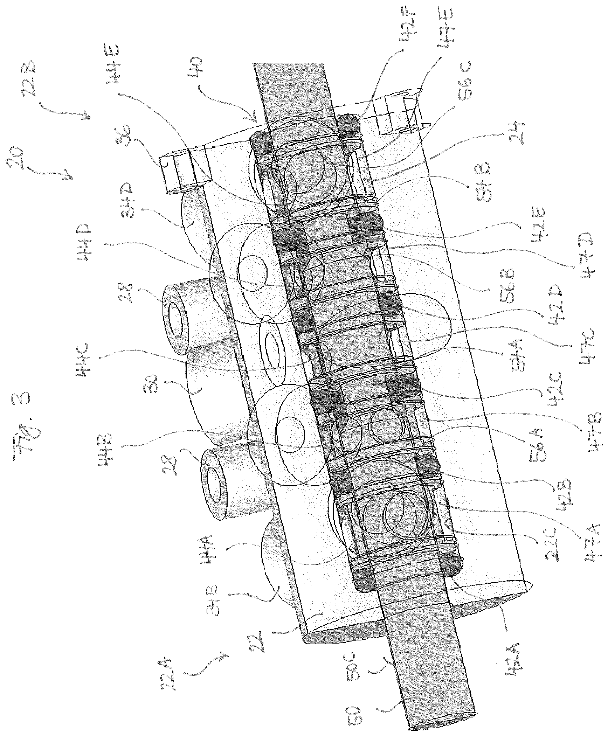

Fig. 3 is a sectional view of pneumatic valve **20.** A portion of plunger **50** received within valve chamber **26** of valve housing **22** comprises a first reduced diameter portion **54A** between a first portion **56A** and a second portion **56B,** and a second reduced diameter portion **54B** between second portion **56B** and third portion **56C**. Thus, first reduced diameter portion **54A** is axially spaced from second reduced diameter portion **54B** by second portion **56B**.

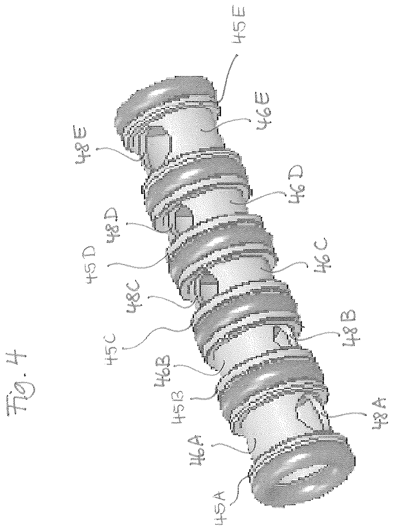

Snugly received within bore **24** is a sealing assembly **40** comprising sealing members **42A** to **42F** spaced apart by tubular bodies **44A** to **44E,** respectively. In the embodiment shown in Figs. 3 and 4, sealing assembly **40** comprises six sealing members **42A, 42B, 42C, 42D, 42E, 42F** provided in the form of O-rings and arranged between an inner surface **22C** of valve housing **22** and an outer surface **50C** of plunger **50.**

As can be seen in Fig. 4, each tubular body **44A** to **44E** has a pair of flanges **45A** to **45E,** between which a cylindrical wall **46A** to **46E** is located such that an annular space **47A** to **47E** is defined between each cylindrical wall **46A** to **46E** and inner surface **22C**. Further, each cylindrical wall **46A** to **46E** is provided with an opening **48A** to **48E,** respectively.

Referring again to Fig. 3, tubular body **44A** near front end portion **22A** is positioned radially below vent silencers **34A, 34B** and tubular body **44E** near rear end portion **22B** is positioned radially below vent silencers **34C, 34D.** Tubular bodies **44B, 44D** are positioned radially below outlets **32A, 32B,** respectively. Tubular body **44C** is positioned radially below inlet **30.** Thus, inlet **30** is in fluid connection with annular space **47C** and outlets **32A, 32B** are in fluid connection with annular spaces **47B, 47D,** respectively.

The function of pneumatic valve **20** is illustrated with particular reference to Fig. 3. In the axial position of plunger **50** depicted in Fig. 3, first reduced diameter portion **54A** is positioned between outlet **32A** and inlet **30** such that sealing member **42C** may be bypassed (Fig. 2). In this way, outlet **32A** and inlet **30** are fluidly connected via annular space **47B**, opening **48B**, reduced diameter portion **54A**, opening **48C** and annular space **47C** so as bring pressure source **PS** into fluid communication with an operating member coupled to outlet **32A**. Second reduced diameter portion **54B** is positioned between outlet **32B** and vent silencers **34C, 34D** such that sealing member **42E** may be bypassed (Fig. 2). In this way, outlet **32B** and vent silencers **34C, 34D** are fluidly connected via annular space **47D**, opening **48D**, reduced diameter portion **54B**, opening **48E** and annular space **47E.** This allows pressure in an operating member coupled to outlet **32B** to be relieved by vent silencers **34C, 34D.** Fluid communication between inlet **30** and outlet **32B** is prohibited by sealing member **42D**.

With reference to Fig. 5, a rear end portion **50B** of plunger **50** has a threaded blind hole **52** formed therein. A cam body **130** having an opening **132** is attached to rear end portion **50B** of plunger **50** by means of a screw **136** received through opening **132** and threaded blind hole **52.** A screw head **136A** of screw **136** bears against an annular shoulder **138** formed in opening **132.**

Formed integrally with selector housing **110** at a rear end **110B** are two diametrically opposite stop members **120A, 120B** (only stop member **120A** is visible in Fig. 5) that extend parallel to axis **A** and protrude radially into selector chamber **112** (Fig. 2). Stop members **120A, 120B** provide stop surfaces **122** described in more detail below.

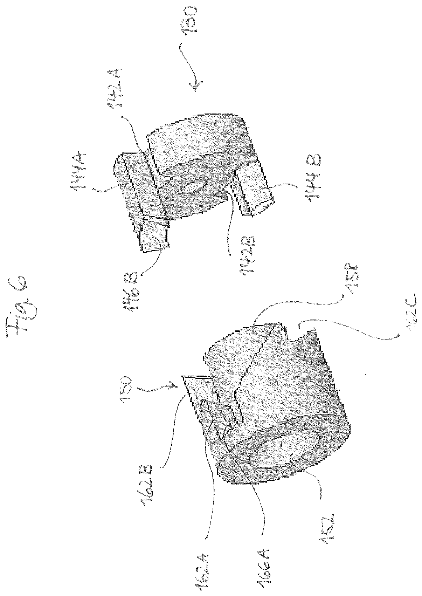

As can best be seen from Fig. 6, cam body **130** comprise a pair of radially opposite slots **142A, 142B** for receiving respective ones of the pair of stop members **120A, 120B.** Formed integrally with cam body **130** is a pair of diametrically opposite fingers **144A, 144B** extending parallel with stop members **120A, 120B.** Fingers **144A, 144B** provide a plurality of cam surfaces, of which only cam surfaces **146A, 146B** of finger **144A** are shown.

As can be seen from Figs. 5 and 6, stop members **120A, 120B** are longer in the longitudinal direction of axis **A** than fingers **144A, 144B.** Further, stop members **120A, 120B** are narrower in a circumferential direction than fingers **144A, 144B.**

With reference again to Fig. 5, a spacer body **150** is rotatably and slidably disposed on plunger **50** in selector chamber **112** so as to in effect be "floating" therein. Spacer body **150** has a bore **152** with a forwardly facing enlarged diameter portion **154A** and a rearwardly facing reduced diameter portion **154B** providing a shoulder **156.** A ring-shaped protrusion formed on plunger **50** acts as a limiting member **60** for axial movement of spacer body **150.**

As can be seen in the exemplary embodiment of Fig. 6, spacer body **150** is provided, in total, with three pairs of recesses for selectively receiving and coacting with the pair of stop members **120A, 120B** and the pair of fingers **144A, 144B.** Of the three pairs of recesses, only an initial recess **162A,** a first recess **162B** and a third recess **162C** can be seen in Fig. 6. The depicted recesses **162A, 162B, 162C** provide a plurality of spacer surfaces **164A** to **164C, 166A** to **166C, 168, 170.** Spacer body **150** further comprises a central hub **158** of such diameter as to slidably fit between fingers **144A, 144B.**

A resilient spring **180** is received within bore **152** of spacer body **150** and surrounds plunger **50.** Resilient spring **180** is seated against a rear surface **60B** of ring-shaped limiting member **60** and bears against shoulder **156** formed by reduced diameter portion **154B** of spacer body **150.** Resilient spring **180** biases spacer body **150** towards cam body **130.**

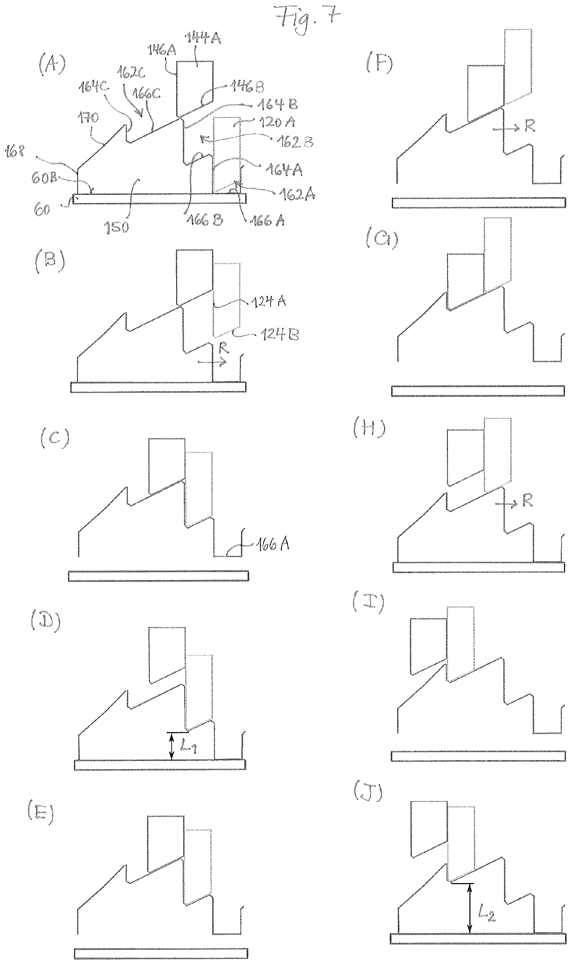

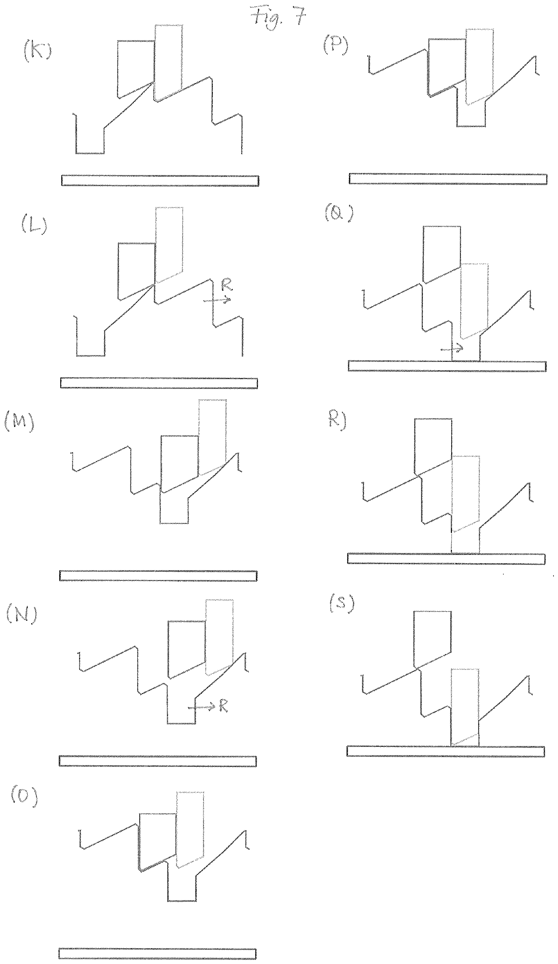

Figs. 7A to 7S show the operation of selection mechanism **100.** Figs. 7A to 7S are diagrammatic developed views of a 180°-portion of the circumferential surface of spacer body **150** illustrating step-by-step the manner in which spacer surfaces **164A** to **164C, 166A** to **166C, 168, 170** of spacer body **150** are engaged alternately by cam surfaces **146A, 146B** of finger **144A,** stop surfaces **122** of stop member **120A.** The remaining 180°-portion of spacer body **150** not shown is identical to the 180°-portion depicted in Figs. 7A to 7S. In other words, the mechanism is arranged twice at diametrically opposite positions about axis **A** so that any generated forces act symmetrically and cause no tilting of any component.

As can be inferred from Figs. 7A to 7S, initial recess **162A** has a leading surface **164A** extending substantially parallel to axis **A,** a trailing surface **166A** extending substantially orthogonal to axis **A** and a flanking surface **168** extending substantially parallel to axis **A.** First recess **162B** has a leading surface **164B** extending substantially parallel to axis **A** and a trailing surface **166B** extending circumferentially in a sloped manner. Second recess **162C** has a leading surface **164C** extending substantially parallel to axis **A** and a trailing surface **166C** extending circumferentially in a sloped manner. Second recess **162C** is connected to initial recess **162A** by a funnelling surface **170** extending circumferentially in a sloped manner.

Cam surfaces **146A, 146B** of finger **144A** comprise a leading surface **146A** extend substantially parallel to axis **A** and a trailing surface **146B** extending circumferentially in a sloped manner. Stop surfaces **122** of stop member **120A** comprise a leading surface **124A** extend substantially parallel to axis **A** and a trailing surface **124B** extending circumferentially in a sloped manner. Rear surface **60B** of limit member **60** extends substantially orthogonal to axis **A.**

Trailing surfaces **166B, 166C** of spacer body **150** are oriented in the same sense and have the same slope, i.e., they are oriented so as to impart a unidirectional rotational movement to spacer body **150** when moved against trailing surfaces **146B, 124B** of rotationally fixed cam body **130** and stop member **120A.**

Trailing surface **146B** of finger **144A** and trailing surface **124B** of stop member **120A** are formed with a slope corresponding to that of trailing surfaces **166B, 166C** of spacer body **150** and in the same sense.

As shown in Figs. 7A to 7S, in the circumferential direction of spacer body **150,** trailing surface **166B** is shorter than trailing surface **166C** and funnelling surface **170,** and trailing surface **166C** is shorter than funnelling surface **170.** Funnelling surface **170** is steeper in slope than trailing surfaces **166B, 166C.** Further, in the longitudinal direction of axis **A,** leading surface **164C** is shorter than leading surfaces **164A, 164B,** and leading surface **164A** is shorter than leading surface **164B.**

The operation of selection mechanism **100** will now be described with particular reference to Figs. 7A to 7S. As will be appreciated and although not shown in Figs. 7A to 7S, the following discussion applies also to finger **144B** of cam body **130** and stop member **120B** of selector housing **110.**

Fig. 7A shows an initial axial position **P0** of plunger **50.** In initial axial position **P0,** spring loaded foot pedal **FP** biases limiting member **60** towards stop member **120A** such that rear surface **60B** abuts front surface **150A** of spacer body **150.** However, for ease of reference, the following discussion refers to trailing surface **166A** rather than to front surface **150A,** even though these surfaces **166A, 150A** are axially spaced apart in the depicted embodiment. As shown in Fig. 7A, finger **144A** is positioned axially rearwardly of trailing surface **166C** and abuts trailing surface **166C.** Stop member **120A** is received within initial recess **162A** so as to prevent rotational movement of spacer body **150.** Initial axial position **P0** of plunger **50** corresponds to an initial non-depressed position of foot pedal **FP** and an initial rotational position of spacer body **150.** In initial axial position **P0,** forwardly pointing tip of stop member **120A** abuts trailing surface **166A** and thus defines the axial position of plunger **50** relative to valve housing **22** and selector housing **110.** In other words, in initial position **P0** of plunger **50,** stop members **120A, 120B** limit rearward movement of spacer body **150,** which in turn limits rearward movement of limiting member **60** such that plunger **50** is prevented from moving rearwardly.

When foot pedal **FP** is depressed from the initial non-depressed position, plunger **50** together with limiting member **60** and finger **144A** of cam body **130** are moved axially forwardly under the guidance of stop member **120A**. Since trailing surface **146B** abuts trailing surface **166C**, spacer body **150** follows the movement of plunger **50.**

In Fig. 7B, spacer body **150** has been depressed to an extent sufficient to permit leading surface **124A** of stop member **120A** to clear leading surface **164A** of spacer body **150.** Spacer body **150** is free to rotate (in a rotational direction **R**) under the influence of the slope of trailing surfaces **146B, 166C** and of resilient spring **180** which applies a constant rearward force to spacer body **150** until stop member **120A** abuts leading surface **164B**, as shown in Fig. 7C. In the position of Fig. 7B, the resistance of foot pedal **FP** to depression reduces since resilient spring **180** is free to expand, indicating to an operator to let go of foot pedal **FP**.

When the operator releases foot pedal **FP**, so as to permit rear surface **60B** to move into abutment with trailing surface **166A** of spacer body **150,** plunger **50** moves axially rearwardly under the influence of the spring of foot pedal **FP** and under the guidance of stop member **120A**. Plunger **50** will then reach a first axial position **P1,** as shown in Fig. 7D. In first axial position **P1,** stop member **120A** is received within first recess **162B**. As can be seen from Fig. 7D, in first axial position **P1,** plunger **50** is located forwardly compared to initial axial position **P0.** First axial position **P1** of plunger **50** corresponds to a first depressed position of foot pedal **FP** and a first rotational position of spacer body **150.** It will be appreciated that first axial position **P1** of plunger **50** is different from its initial axial position **P0** by distance **L1** defined by the axial distance of the most forwardly located points of trailing surfaces **166A, 166B** and that the first depressed position of foot pedal **FP** is different from its initial non-depressed position. Also, the first rotational position of spacer body **150** is different from its initial rotational position.

When foot pedal **FP** is further depressed from the first depressed position, finger **144A** moves axially forwardly, under the guidance of stop member **120A**, until trailing surface **146B** of finger **144A** abuts trailing surface **166C** of spacer body **150,** as shown in Fig. 7E. Further depression of foot pedal **FP** causes finger **144A** to carry with it spacer body **150** until leading surface **164B** of spacer body **150** is clear of leading surface **124A** of stop member **144A** and free to rotate under the influence of the slope of trailing surfaces **146B, 166C** and of resilient spring **180,** as shown in Fig. 7F. Trailing surface **166C** of spacer body **150** slides along trailing surface **146B** of finger **144A** until leading surface **164C** of spacer body **150** abuts leading surface **146A** of finger **144A,** as shown in Fig. 7G.

In the position of plunger **50** shown in Fig. 7F, resilient spring **180** is free to expand such that the resistance of foot pedal **FP** to depression reduces. This indicates to an operator to release foot pedal **FP.**

When the operator releases foot pedal **FP,** plunger **50** moves axially rearwardly under the influence of the spring of foot pedal **FP** and under the guidance of stop member **120A,** as illustrated in Figs. 7G to 7J. It will be appreciated that the positions depicted in Figs. 7G to 7J are for illustrative purposes only. In particular, once foot pedal **FP** is released, spacer body **150** performs both axial and rotational movement, while plunger **50** moves axially rearwardly. In contrast, to transition from Fig. 7G to 7H and from Fig. 7I to 7J, only plunger **50** has moved axially rearwardly and, to transition from Fig. 7H to 7I, spacer body **150** has rotated in rotational direction **R** and moved rearwardly. As shown in Fig. 7J, plunger **50** will finally reach a second axial position **P2.** In second axial position **P2,** stop member **120A** is received within second recess **162C** and plunger **50** is located forwardly compared to initial axial position **P0** and first axial position **P1.** Second axial position **P1** corresponds to a second depressed position of foot pedal **FP** and a second rotational position of spacer body **150.** It will again be appreciated that second axial position **P2** of plunger **50** is different from its initial axial positions **P0** by distance **L2** defined by the axial distance of the most forwardly located points of trailing surfaces **166A, 166C,** and that the second depressed position of foot pedal **FP** is different from its initial non-depressed position and its first depressed position. Also, the second rotational position of spacer body **150** is different from its initial rotational position and its first rotational position.

When foot pedal **FP** is further depressed from the second depressed position, finger **144A** moves axially forwardly, under the guidance of stop member **120A,** until trailing surface **146B** of finger **144A** engages a rearward portion of funnelling surface **170** of spacer body **150,** as shown in Fig. 7K. In Fig. 7L, finger **144A** and, under the action of finger **144A,** spacer body **150** have moved to an extent sufficient to permit leading surface **124A** of stop member **120A** to clear leading surface **164C** of spacer body 150. Spacer body **150** is free to rotate under the influence of resilient spring **180** until leading surface **146A** of finger **144A** abuts leading surface **164A,** as shown in Fig. 7M.

In the position of Fig. 7L, the resistance of foot pedal **FP** to depression reduces since resilient spring **180** is free to expand, indicating to an operator to release foot pedal **FP**. Additionally or alternatively, limiting member **60** may be arranged such that, upon maximum depression of plunger **50,** a front surface **60A** of limiting member **60** abuts a rear surface **116B** of front end plate **116.** The maximum depression of plunger **50** may also indicate to the operator to let go of foot pedal **FP**.

When the operator releases foot pedal **FP,** plunger **50** moves axially rearwardly under the influence of the spring of foot pedal **FP** and under the guidance of stop member **120A,** as illustrated in Figs. 7N to 7S. Spacer body **150** is free to move axially rearwardly under the influence of resilient spring **180** until trailing surface **124B** of stop member **120A** engages a forward portion of funnelling surface **170** of spacer body **150.** This is illustrated in Fig. 7P. Once spacer body **150** has reached the axial position of Fig. 7P, further axial movement is prevented by stop member **120A** such that spacer body **150** is only free to rotate, as shown in the transition from the rotational position of spacer body **150** in Fig. 7Q to the rotational position of spacer body **150** in Fig. 7R. Plunger **50** is now free to move back into initial axial position **P0,** as shown in Fig. 7S. Fig. 7S corresponds to the situation of Fig. 7A. At the same time, foot pedal **FP** reaches again its initial non-depressed position. During the axial movement of plunger **50** from initial axial position **P0** and back to initial axial position **P0,** spacer body **150** has rotated by 180°.

It will again be appreciated that the positions depicted in Figs. 7N to 7S are for illustrative purposes only. In particular, Figs. 7N to 7S distinguish between axial and rotational movement of spacer body **150** and axial movement of plunger **50,** although the movements of both spacer body **150** and plunger **50** may occur simultaneously and need not follow one another successively.

It should be understood that limiting member **60** and cam body **130** may be arranged at a greater axial distance from each other than shown in Figs. 7A to 7S. In this case, cam surface **146B** and trailing surface **166A** may be spaced apart by an axial distance in initial position **P0,** contrary to the illustration in Fig. 7A. This axial distance serves as backlash or play, and may prevent jamming and facilitate a smooth interaction between limiting member **60** provided on plunger **50,** cam body **130** and spacer body **150.** Since the axial distance between limiting member **60** and cam body **130** is fixed due to cam body **130** being fixedly attached to plunger **50,** this backlash propagates through all of Figs. 7A to 7S. Thus, when foot pedal **FP** is depressed from its initial non-depressed position, spacer body **150** is pressed down by cam body **130,** which follows the movement of plunger **50,** only after the axial distance between cam surface **146B** and trailing surface **166A** has been overcome. First axial position **P1** of plunger **50,** shown in Fig. 7D, and second axial position **P2** of plunger **50,** shown in Fig. 7J, are still defined by limiting member **60** pressing against spacer body **150,** which in turn presses against stop members **120A, 120B,** thereby preventing further rearward movement of plunger **50.**

In another embodiment, it is possible to omit first axial position **P1** when starting from initial axial position **P0** by depressing pedal **FP** from the initial non-depressed position directly to the second depressed position. In this case, in the sequence of operation as shown in Figs. 7A to 7S, the steps of Figs. 7D and 7E are omitted such that the transition occurs from Fig. 7C directly to Fig. 7F.

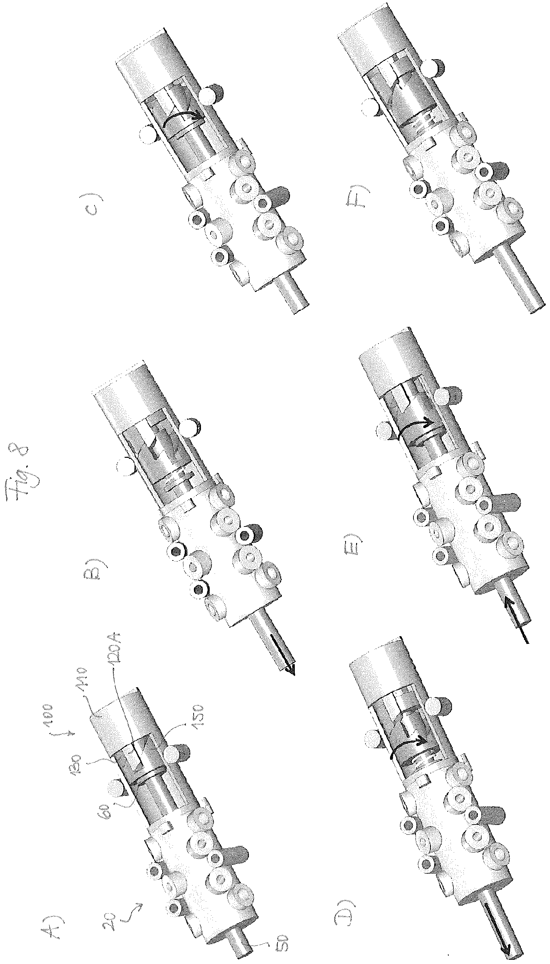

Figs. 8A to 8F also depict the operation of pneumatic valve unit **10.** In Fig. 8A, plunger **50** is in its initial axial position **P0** and spacer body **150** is in its initial rotational position. In Fig. 8B, foot pedal **FP** has been depressed and plunger **50** moved axially forwardly such that spacer body **150** was permitted to rotate towards the first rotational position. When foot pedal **FP** is released, plunger **50** attains its first axial position **P1,** as shown in Fig. 8C. In Fig. 8D, foot pedal **FP** has been depressed again. Thereby, plunger **50** has moved axially forwardly and spacer body **150** has become free to rotate towards its second rotational position. When foot pedal **FP** is released, as shown in Fig. 8E, plunger **50** attains its second axial position **P2.** To return plunger **50** to initial axial position **P0,** foot pedal **FP** is depressed and released once more to permit spacer body **150** to rotate toward and into the initial rotational position. This is shown in Fig. 8F.

### List of reference

- **TC**: tire changer
- **H**: mount/demount head
- **TT**: turntable
- **CJ**: clamping jaws
- **BBB**: bead breaker
- **BBA**: bead breaker arm
- **BBB**: bead breaker blade
- **PS**: pressure source
- **SL**: supply line
- **FP1-FP3**: foot pedals
- **FP**: foot pedal
- **A**: longitudinal axis
- **P0**: initial axial position
- **P1**: first axial position
- **P2**: second axial position
- **R**: rotational direction

- **10**: pneumatic valve unit

- **20**: pneumatic valve
- **22**: valve housing
- **22A**: front end portion
- **22B**: rear end portion
- **22C**: inner surface
- **24**: opening
- **26**: valve chamber
- **28**: attachment means
- **30**: inlet
- **32A-B**: outlets
- **34A-34D**: vent silencers
- **36**: fixation members

- **40**: sealing assembly
- **42A-42F**: sealing members
- **44A-44E**: tubular bodies
- **45A-E**: pair of flanges
- **46A-46E**: cylindrical wall
- **47A-E**: annular space
- **48A-48E**: openings

- **50**: plunger
- **50A**: front end
- **50B**: rear end
- **50C**: outer surface
- **52**: threaded blind hole
- **54A-B**: first and second reduced diameter portion
- **56A-C**: first, second and third portions

- **60**: limiting member
- **60A**: front surface
- **60B**: rear surface

- **100**: selection mechanism

- **110**: selector housing
- **110B**: rear end
- **111A-B**: upper and lower shell
- **112**: selector chamber
- **114**: fixation members
- **116**: front end plate
- **116A**: opening
- **116B**: **rear surface**
- **118**: rear end plate

- **120A-B**: stop members
- **122**: stop surfaces
- **124A**: leading surface
- **124B**: trailing surface

- **130**: cam body
- **132**: opening
- **136**: screw
- **136A**: screw head
- **138**: shoulder
- **146A-B**: cam surfaces
- **142A-B**: slots
- **144A-B**: fingers

- **146B**: trailing surface
- **150**: spacer body
- **150A**: front surface
- **152**: bore
- **154A**: enlarged diameter portion
- **154B**: reduced diameter portion
- **156**: shoulder
- **158**: central hub
- **164A-C, 166A-166C, 168,170**: spacer surfaces
- **162A-C**: initial, first and second recess
- **164A-C**: leading surfaces
- **166A-C**: trailing surfaces
- **168**: flanking surface
- **170**: funnelling surface
- **180**: resilient spring

## Claims

1. A pneumatic valve unit (10) for use in a tire changer (TC) for selectively connecting at least one pressure source (PS) of the tire changer (TC) to at least two operating members (TT, CJ, BBA, BBB) of the tire changer (TC) upon successive operation of at least one pedal (FP) of the tire changer (TC), the pneumatic valve unit (10) comprising:
- a pneumatic valve (20) comprising:
∘ a valve housing (22) defining a valve chamber (26), the valve housing (22) having at least one inlet (30) for fluidly connecting the valve chamber (26) to the pressure source (PS), and at least one outlet (32A, 32B) for fluidly connecting the valve chamber (26) to the operating members (TT, CJ, BBA, BBB), and
∘ a plunger (50) axially slidably received in the valve housing (22), the plunger (50) being operatively coupleable to the pedal (FP) and movable between at least two predetermined axial positions (P0, P1, P2) upon successive operation of the pedal (FP) so as to selectively connect the operating members (TT, CJ, BBA, BBB) to the pressure source (PS), and
- a selection mechanism (100) for selectively connecting the pressure source (PS) to the operating members (TT, CJ, BBA, BBB) upon successive operation of the pedal (FP),
wherein the selection mechanism (100) comprises:
- a selector housing (110) for axially slidably receiving the plunger (50) therein,
- a cam body (130) comprising a plurality of cam surfaces (146A, 146B),
- a spacer body (150) comprising a plurality of spacer surfaces (164A-C, 166A-166C, 168, 170) for coacting with the cam surfaces (146A, 146B), and
- a biasing means (180) for biasing the spacer body (150) towards the cam body (130),
wherein, when the pedal (FP) is released, the selection mechanism (100) is adapted to axially and rotationally restrain the plunger (50) in one of the predetermined axial positions (P0, P1, P2) and the spacer body (150) in one of at least two predetermined rotative positions relative to the plunger (50), and, when the pedal (FP) is operated, the selection mechanism (100) is adapted to release the rotational restraint of the spacer body (150) and subsequently allow the spacer surfaces (164A-C, 166A-166C, 168, 170) of the spacer body (150) to coact with the cam surfaces (146A, 146B) of the cam body (130) so as to cause the spacer body (150) to unidirectionally rotate to another one of the predetermined rotative positions such that, upon release of the pedal (FP), the plunger (50) moves to another one of the predetermined axial positions (P0, P1, P2),
wherein the plunger (50), upon successive operation of the pedal (FP), is successively movable between at least three predetermined axial positions (P0, P1, P2) such that the pneumatic valve (20) has at least two working positions, wherein in each working position one of the operating members (TT, CJ, BBA, BBB) is fluidly connected to the pressure source (PS), and at least one resting position, in which the operation members (TT, CJ, BBA, BBB) are fluidly disconnected from the pressure source (PS).

2. The pneumatic valve unit of claim 1, wherein the cam body (130) is fixedly connected to the plunger (50).

3. The pneumatic valve unit of claim 1 or 2, wherein the spacer body (150) has a central bore (152) for receiving the plunger (50) therein, the spacer body (150) being axially slidably and rotatably received on the plunger (50).

4. The pneumatic valve unit of any one of the preceding claims, wherein the selector mechanism (100) further comprises at least one axially extending stop member (120A, 120B) for coacting with the cam surfaces (146A, 146B) of the cam body (130) and the spacer surfaces (164A-C, 166A-166C, 168, 170) of the spacer body (150), wherein the stop member (120A, 120B) protrudes radially inwardly from the selector housing (110) into a selector chamber (112) defined by the selector housing (110).

5. The pneumatic valve unit of any one of the preceding claims, wherein one end of the selector housing (110) is fixedly connected to one end of the valve housing (22).

6. The pneumatic valve unit of any one of the preceding claims, wherein the selector housing (110) encloses a selector chamber (112) for axially slidably receiving the plunger (50) therein.

7. The pneumatic valve unit of any one of the preceding claims, wherein the selector mechanism (100) further comprises a limiting member (60) arranged on the plunger (50) for limiting axial movement of the spacer body (150).

8. The pneumatic valve unit of claims 6 and 7, when dependent on claim 3, wherein the central bore (152) of the spacer body (150) is a stepped bore having an enlarged diameter portion (154A) for receiving a first end of the spring member (180) seated against the limiting member (60) and a reduced diameter portion (154B) for providing a shoulder (156) for a second end of the spring member (180) to bear against.

9. The pneumatic valve unit of any one of the preceding claims, wherein the at least one inlet (30) and the at least two outlets (32A, 32B) are axially and rotatively spaced from one another.

10. The pneumatic valve unit of any one of the preceding claims, wherein each predetermined axial position (P0, P1, P2) of the plunger (50) corresponds to a predetermined depression position of the pedal (FP).

11. The pneumatic valve unit of claim 10, wherein the plunger (50) has an initial axial position (P0) corresponding to the pedal (FP) being in an initial non-depressed position, the plunger (50) has a first axial position (P1) corresponding to the pedal being in a first depressed position, and the plunger (50) has a second axial position (P2) corresponding to the pedal (FP) being in a second depressed position.

12. The pneumatic valve unit of claim 11, wherein the plunger (50) is movable from the initial axial position (P0) directly to the second axial position (P2).

13. A tire changer (TC) comprising at least one pressure source (PS), at least two operating members (TT, CJ, BBA, BBB), at least one pedal (FP1, FP2, FP3) and at least one pneumatic valve unit (10),
**characterized in that** the pneumatic valve unit (10) is configured according to any one of claims 1 to 12.

## Patentansprüche

1. Pneumatische Ventileinheit (10) zur Verwendung in einer Reifenmontiermaschine (TC) zum selektiven Verbinden wenigstens einer Druckquelle (PS) der Reifenmontiermaschine (TC) mit wenigstens zwei Betätigungselementen (TT, CJ, BBA, BBB) der Reifenmontiermaschine (TC) bei aufeinanderfolgender Betätigung wenigstens eines Pedals (FP) der Reifenmontiermaschine (TC), wobei die pneumatische Ventileinheit (10) umfasst:
- ein pneumatisches Ventil (20), umfassend:
o ein Ventilgehäuse (22), das eine Ventilkammer (26) definiert, wobei das Ventilgehäuse (22) wenigstens einen Einlass (30) zur Fluidverbindung der Ventilkammer (26) mit der Druckquelle (PS) und wenigstens einen Auslass (32A, 32B) zur Fluidverbindung der Ventilkammer (26) mit den Betätigungselementen (TT, CJ, BBA, BBB) aufweist, und
o einen Kolben (50), der axial gleitend in dem Ventilgehäuse (22) aufgenommen ist, wobei der Kolben (50) mit dem Pedal (FP) operativ koppelbar ist und bei aufeinanderfolgender Betätigung des Pedals (FP) zwischen wenigstens zwei vorbestimmten axialen Positionen (P0, P1, P2) bewegbar ist, um die Betätigungselemente (TT, CJ, BBA, BBB) selektiv mit der Druckquelle (PS) zu verbinden, und
- einen Auswahlmechanismus (100) zum selektiven Verbinden der Druckquelle (PS) mit den Betätigungselementen (TT, CJ, BBA, BBB) bei aufeinanderfolgender Betätigung des Pedals (FP),
wobei der Auswahlmechanismus (100) umfasst:
- ein Selektorgehäuse (110) zum axial verschiebbaren Aufnehmen des Kolbens (50),
- einen Nockenkörper (130), der mehrere Nockenflächen (146A, 146B) aufweist,
- einen Abstandskörper (150), der mehrere Abstandskörperflächen (164A-C, 166A-166C, 168,170) für ein Zusammenwirken mit den Nockenflächen (146A, 146B) aufweist, und
- ein Vorspannmittel (180) zum Vorspannen des Abstandskörpers (150) in Richtung zu dem Nockenkörper (130),
wobei dann, wenn das Pedal (FP) losgelassen wird, der Auswahlmechanismus (100) so ausgelegt ist, dass er den Kolben (50) in einer der vorbestimmten axialen Positionen (P0, P1, P2) und den Abstandskörper (150) in einer von wenigstens zwei vorbestimmten Drehpositionen relativ zum Kolben (50) axial und rotatorisch festhält, und dann, wenn das Pedal (FP) betätigt wird, der Auswahlmechanismus (100) so ausgelegt ist, dass er die rotatorische Festlegung des Abstandskörpers (150) löst und anschließend zulässt, dass die Abstandskörperflächen (164A-C, 166A-166C, 168, 170) des Abstandskörpers (150) mit den Nockenflächen (146A, 146B) des Nockenkörpers (130) zusammenwirken, um den Abstandskörper (150) zu veranlassen, sich unidirektional in eine weitere der vorbestimmten Drehpositionen zu drehen, so dass sich der Kolben (50) beim Loslassen des Pedals (FP) in eine weitere der vorbestimmten axialen Positionen (P0, P1, P2) bewegt,
wobei der Kolben (50) bei aufeinanderfolgender Betätigung des Pedals (FP) nacheinander zwischen wenigstens drei vorbestimmten axialen Positionen (P0, P1, P2) bewegbar ist, so dass das pneumatische Ventil (20) wenigstens zwei Arbeitspositionen aufweist, wobei in jeder Arbeitsposition eines der Betätigungselemente (TT, CJ, BBA, BBB) mit der Druckquelle (PS) fluidisch verbunden ist, und wenigstens eine Ruheposition, in der die Betätigungselemente (TT, CJ, BBA, BBB) von der Druckquelle (PS) fluidisch getrennt sind.

2. Pneumatische Ventileinheit nach Anspruch 1, wobei der Nockenkörper (130) fest mit dem Kolben (50) fest verbunden ist.

3. Pneumatische Ventileinheit nach Anspruch 1 oder 2, wobei der Abstandskörper (150) eine zentrale Bohrung (152) zum Aufnehmen des Kolbens (50) aufweist, wobei der Abstandskörper (150) axial verschiebbar und drehbar auf den Kolben (50) aufgesetzt ist.

4. Pneumatische Ventileinheit nach einem der vorangehenden Ansprüche, wobei der Auswahlmechanismus (100) ferner wenigstens ein sich axial erstreckendes Anschlagelement (120A, 120B) für ein Zusammenwirken mit den Nockenflächen (146A, 146B) des Nockenkörpers (130) und den Abstandskörperflächen (164A-C, 166A-166C, 168, 170) des Abstandskörpers (150) aufweist, wobei das Anschlagelement (120A, 120B) von dem Selektorgehäuse (110) radial nach innen in eine durch das Selektorgehäuse (110) definierte Selektorkammer (112) ragt.

5. Pneumatische Ventileinheit nach einem der vorangehenden Ansprüche, wobei ein Ende des Selektorgehäuses (110) fest mit einem Ende des Ventilgehäuses (22) verbunden ist.

6. Pneumatische Ventileinheit nach einem der vorangehenden Ansprüche, wobei das Selektorgehäuse (110) eine Selektorkammer (112) zum axial verschiebbaren Aufnehmen des Kolbens (50) umschließt.

7. Pneumatische Ventileinheit nach einem der vorangehenden Ansprüche, wobei der Auswahlmechanismus (100) ferner ein Begrenzungselement (60) umfasst, das auf dem Kolben (50) angeordnet ist, um eine axiale Bewegung des Abstandskörpers (150) zu begrenzen.

8. Pneumatische Ventileinheit nach Anspruch 6 und 7, wenn abhängig von Anspruch 3, wobei die zentrale Bohrung (152) des Abstandskörpers (150) eine abgestufte Bohrung ist, mit einem Abschnitt (154A) mit vergrößertem Durchmesser zur Aufnahme eines ersten Endes des Federelements (180), das an dem Begrenzungselement (60) sitzt, und einem Abschnitt (154B) mit reduziertem Durchmesser zur Bereitstellung einer Schulter (156), an der ein zweites Ende des Federelements (180) anliegt.

9. Pneumatische Ventileinheit nach einem der vorangehenden Ansprüche, wobei der wenigstens eine Einlass (30) und die wenigstens zwei Auslässe (32A, 32B) axial und rotatorisch voneinander beabstandet sind.

10. Pneumatische Ventileinheit nach einem der vorangehenden Ansprüche, wobei jede vorbestimmte axiale Position (P0, P1, P2) des Kolbens (50) einer vorbestimmten Niederdrückposition des Pedals (FP) entspricht.

11. Pneumatische Ventileinheit nach Anspruch 10, wobei der Kolben (50) eine axiale Ausgangsposition (P0) aufweist, die dem in einer nicht niedergedrückten Ausgangsposition befindlichen Pedal (FP) entspricht, der Kolben (50) eine erste axiale Position (P1) aufweist, die dem sich in einer ersten niedergedrückten Position befindlichen Pedal entspricht, und der Kolben (50) eine zweite axiale Position (P2) aufweist, die dem sich in einer zweiten niedergedrückten Position befindlichen Pedal (FP) entspricht.

12. Pneumatische Ventileinheit nach Anspruch 11, wobei der Kolben (50) von der axialen Ausgangsposition (P0) direkt in die zweite axiale Position (P2) bewegbar ist.

13. Reifenmontiermaschine (TC), die wenigstens eine Druckquelle (PS), wenigstens zwei Betätigungselemente (TT, CJ, BBA, BBB), wenigstens ein Pedal (FP1, FP2, FP3) und wenigstens eine pneumatische Ventileinheit (10) umfasst,
**dadurch gekennzeichnet, dass** die pneumatische Ventileinheit (10) nach einem der Ansprüche 1 bis 12 konfiguriert ist.

## Revendications

1. Unité de valve pneumatique (10) destinée à être utilisée dans un changeur de pneu (TC) pour relier sélectivement au moins une source de pression (PS) du changeur de pneu (TC) à au moins deux éléments d'actionnement (TT, CJ, BBA, BBB) du changeur de pneu (TC) lors du fonctionnement successif d'au moins une pédale (FP) du changeur de pneu (TC), l'unité de valve pneumatique (10) comprenant :
- une valve pneumatique (20) comprenant :
o un boîtier de valve (22) définissant une chambre de valve (26), le boîtier de valve (22) présentant au moins une entrée (30) pour relier fluidiquement la chambre de valve (26) à la source de pression (PS) et au moins une sortie (32A, 32B) pour relier fluidiquement la chambre de valve (26) aux éléments d'actionnement (TT, CJ, BBA, BBB) et
o un piston (50) reçu de manière axialement coulissante dans le boîtier de valve (22), le piston (50) pouvant être accouplé de manière fonctionnelle à la pédale (FP) et étant mobile entre au moins deux positions axiales prédéterminées (P0, P1, P2) lors du fonctionnement successif de la pédale (FP) de façon à relier sélectivement les éléments d'actionnement (TT, CJ, BBA, BBB) à la source de pression (PS) et
- un mécanisme de sélection (100) pour relier sélectivement la source de pression (PS) aux éléments d'actionnement (TT, CJ, BBA, BBB) lors du fonctionnement successif de la pédale (FP),
le mécanisme de sélection (100) comprenant :
- un boîtier de sélecteur (110) pour recevoir de manière axialement coulissante le piston (50) en son sein,
- un corps de came (130) comprenant une pluralité de surfaces de came (146A, 146B),
- un corps d'espacement (150) comprenant une pluralité de surfaces d'espacement (164A-C, 166A-166C, 168, 170) pour coopérer avec les surfaces de came (146A, 146B) et
- un moyen de sollicitation (180) pour solliciter le corps d'espacement (150) vers le corps de came (130),
où, lorsque la pédale (FP) est relâchée, le mécanisme de sélection (100) est conçu pour retenir axialement et en rotation le piston (50) dans l'une des positions axiales prédéterminées (P0, P1, P2) et le corps d'espacement (150) dans l'une d'au moins deux positions rotatives prédéterminées par rapport au piston (50) et, lorsque la pédale (FP) est actionnée, le mécanisme de sélection (100) est conçu pour libérer la retenue en rotation du corps d'espacement (150) et permettre ensuite la coopération des surfaces d'espacement (164A-C, 166A-166C, 168, 170) du corps d'espacement (150) avec les surfaces de came (146A, 146B) du corps de came (130) de façon à amener le corps d'espacement (150) à tourner de façon unidirectionnelle vers une autre des positions rotatives prédéterminées de telle sorte que, lors du relâchement de la pédale (FP), le piston (50) se déplace vers une autre des positions axiales prédéterminées (P0, P1, P2),
le piston (50), lors du fonctionnement successif de la pédale (FP), étant successivement mobile entre au moins trois positions axiales prédéterminées (P0, P1, P2) de telle sorte que la valve pneumatique (20) présente au moins deux positions de travail où, dans chaque position de travail, l'un des éléments d'actionnement (TT, CJ, BBA, BBB) est en communication fluidique avec la source de pression (PS), et au moins une position de repos, dans laquelle les éléments d'actionnement (TT, CJ, BBA, BBB) sont fluidiquement déconnectés de la source de pression (PS).

2. Unité de valve pneumatique selon la revendication 1, le corps de came (130) étant relié de manière fixe au piston (50).

3. Unité de valve pneumatique selon la revendication 1 ou 2, le corps d'espacement (150) présentant un alésage central (152) pour recevoir le piston (50) en son sein, le corps d'espacement (150) étant reçu de façon axialement coulissante et rotative sur le piston (50).

4. Unité de valve pneumatique selon l'une quelconque des revendications précédentes, le mécanisme de sélection (100) comprenant en outre au moins un élément d'arrêt (120A, 120B) s'étendant axialement pour coopérer avec les surfaces de came (146A, 146B) du corps de came (130) et avec les surfaces d'espacement (164A-C, 166A-166C, 168, 170) du corps d'espacement (150), l'élément d'arrêt (120A, 120B) faisant saillie radialement vers l'intérieur à partir du boîtier de sélecteur (110) dans une chambre de sélecteur (112) définie par le boîtier de sélecteur (110).

5. Unité de valve pneumatique selon l'une quelconque des revendications précédentes, une extrémité du boîtier de sélecteur (110) étant reliée de manière fixe à une extrémité du boîtier de valve (22).

6. Unité de valve pneumatique selon l'une quelconque des revendications précédentes, le boîtier de sélecteur (110) renfermant une chambre de sélecteur (112) pour recevoir de manière axialement coulissante le piston (50) en son sein.

7. Unité de valve pneumatique selon l'une quelconque des revendications précédentes, le mécanisme de sélection (100) comprenant en outre un l'élément de limitation (60) disposé sur le piston (50) pour limiter le mouvement axial du corps d'espacement (150).

8. Unité de valve pneumatique selon les revendications 6 et 7, lorsque dépendant de la revendication 3, l'alésage central (152) du corps d'espacement (150) étant un alésage étagé présentant une partie (154A) avec un diamètre agrandi pour recevoir une première extrémité de l'élément de ressort (180) reposant contre l'élément de limitation (60) et une partie (154B) avec un diamètre réduit pour fournir un épaulement (156) pour l'appui d'une deuxième extrémité de l'élément de ressort (180) contre celui-ci.

9. Unité de valve pneumatique selon l'une quelconque des revendications précédentes, l'au moins une entrée (30) et les au moins deux sorties (32A, 32B) étant espacées l'une de l'autre de manière axiale et rotative.

10. Unité de valve pneumatique selon l'une quelconque des revendications précédentes, chaque position axiale prédéterminée (P0, P1, P2) du piston (50) correspondant à une position de dépression prédéterminée de la pédale (FP).

11. Unité de valve pneumatique selon la revendication 10, le piston (50) présentant une position axiale initiale (P0) correspondant à la pédale (FP) dans une position initiale non enfoncée, le piston (50) présentant une première position axiale (P1) correspondant à la pédale dans une première position enfoncée et le piston (50) présentant une deuxième position axiale (P2) correspondant à la pédale (FP) dans une deuxième position enfoncée.

12. Unité de valve pneumatique selon la revendication 11, le piston (50) étant mobile à partir de la position axiale initiale (P0) directement vers la deuxième position axiale (P2).

13. Changeur de pneu (TC) comprenant au moins une source de pression (PS), aux moins deux éléments d'actionnement (TT, CJ, BBA, BBB), au moins une pédale (FP1, FP2, FP3) et au moins une unité de valve pneumatique (10), **caractérisé en ce que** l'unité de valve pneumatique (10) est conçu selon l'une quelconque des revendications 1 à 12.
